# EUROPÄISCHE PATENTSCHRIFT

(11) **EP 1 839 805 B1**
(45) Veröffentlichungstag und Bekanntmachung des Hinweises auf die Patenterteilung: **15.10.2008**
(21) Anmeldenummer: 07090069.1
(22) Anmeldetag: 29.03.2007
(51) Int. Cl.: B23Q 3/06, B23Q 3/10, B23Q 3/18

(54) **Haltesystem für scheibenförmige Werkstücke in einer Werkzeugmaschine**
Holding system for disc shaped workpiece in a machine tool
Système de support de pièce en forme de disque dans une machine-outil

(30) Priorität: 31.03.2006 DE 102006015432
(43) Veröffentlichungstag der Anmeldung: 03.10.2007
(73) Patentinhaber: Rolls-Royce Deutschland Ltd & Co KG, 15827 Blankenfelde-Mahlow (DE)
(72) Erfinder: Biertz, Matthias, 61440 Oberursel (DE); Scalla, Patrik, 61350 Bad Homburg (DE); Pieczeit, Wolfgang, 65599 Dornburg (DE)
(74) Vertreter: Wablat, Wolfgang

(56) Entgegenhaltungen:
- EP-A2- 0 709 163
- WO-A-20/06003683
- US-B1- 6 513 241
- US-B1- 6 687 967

## Beschreibung

Die Erfindung betrifft ein Werkstückhaltesystem für eine Werkzeugmaschine zur lagerichtigen Positionierung von scheibenförmigen Werkstücken, insbesondere der Rotorscheiben für ein Gasturbinentriebwerk, im Arbeitsraum der Werkzeugmaschine (siehe, z.B., WO-2006/003683-A).

Beispielsweise umfasst ein mehrstufiger Kompressor eines Gasturbinentriebwerks mehrere, in der jeweiligen Stufe unterschiedlich ausgebildete Rotorscheiben, die jeweils eine zentrisch angeordnete Öffnung zur Durchführung einer Triebwerkswelle und am Außenumfang eine umlaufende Nut oder eine Vielzahl sich in Achsrichtung erstreckender Nuten zur Befestigung der in der jeweiligen Stufe erforderlichen Kompressorschaufeln aufweist. Die Werkstückhalterung bei der in mehreren Schritten durchgeführten spangebenden Bearbeitung derart unterschiedlicher scheibenförmiger Werkstücke erfolgt mit einer für jede der verschiedenen Scheiben und zudem für jeden der unterschiedlichen Bearbeitungsschritte bei ein und derselben Scheibe unterschiedlichen, das heißt entsprechend der Scheibenform und dem Bearbeitungsschritt spezifisch ausgebildeten, einstückigen Spann- und Haltevorrichtung. Bei der Vielzahl erforderlicher Spann- und Haltevorrichtungen für die verschiedenen Scheibengrößen und Bearbeitungsschritte sind der Kostenaufwand und der Lagerplatzbedarf entsprechend hoch. Nachteilig ist zudem der hohe zeitliche Aufwand für das Wechseln der schweren, nur per Kran handhabbaren Vorrichtungen. Während des zeitaufwendigen Umrüstens steht die betreffende Werkzeugmaschine nicht für einen Bearbeitungsvorgang zur Verfügung. Schließlich ist auch der Aufwand für die Wartung und Inspektion der großen Zahl unterschiedlicher Haltevorrichtungen hoch.

Der Erfindung liegt die Aufgabe zugrunde, eine kostengünstige Haltevorrichtungen für in Form und Größe unterschiedliche scheibenförmige Werkstücke zu entwickeln, die einfach zu handhaben sind und einen geringen Rüst-, Lagerhaltungs- und Inspektionsaufwand erfordern.

Erfindungsgemäß wird die Aufgabe mit einer gemäß den Merkmalen des Patentanspruchs 1 ausgebildeten Werkstückhaltesystem gelöst. Vorteilhafte Weiterbildungen und zweckmäßige Ausgestaltungen der Erfindung sind Gegenstand der Unteransprüche.

Der Grundgedanke der Erfindung besteht mit anderen Worten darin, dass in der Werkzeugmaschine eine Grundplatte mit in radialer Richtung und in der Höhe verstellbaren Spannelementen, die das Werkstück am Außenumfang halten, fest montiert ist. Zu der Werkstückhalterung gehören des Weiteren mehrere - unterschiedlich dimensionierte - Zentrierelemente und Auflageelemente. Jeweils ein an das Werkstück und den betreffenden Bearbeitungsschritt angepasstes Auflageelement und Zentrierelement werden vorübergehend auf der Grundplatte fixiert, um das Werkstück in der für die Bearbeitung richtigen Position im Arbeitsraum der Werkzeugmaschine zu positionieren und zu zentrieren. Anschließend wird das Werkstück zwischen den an dessen Außenumfang angelegten Spannelementen verspannt und kann nun in der lagerichtigen Position bearbeitet werden. Für einen nachfolgenden Bearbeitungsschritt an demselben oder einem anders dimensionierten ähnlichen Werkstück müssen lediglich das Auflageelement und das Zentrierelement ausgetauscht werden. Das Austauschen des Zentrier- und des Auflageelements, ist aufgrund des geringen Gewichts und einer einfachen, vorübergehenden Befestigung mit geringem zeit- und Arbeitsaufwand ohne Hilfsmittel möglich. Der Platzbedarf für die Lagerung der manuell handhabbaren Zentrier- und Auflageelemente ist gering.

Die Befestigung der Zentrier- und Auflageelemente erfolgt schraubenlos, zum Beispiel durch eine Bajonettverbindung oder durch Magnetkräfte, und daher mit geringem zeitlichen Aufwand.

In Ausgestaltung der Erfindung können die Auflageelemente zur weiteren Gewichtseinsparung in Sandwichbauweise hergestellt sein. Die manuelle Handhabung kann durch lösbar angebrachte Griffe erleichtert werden.

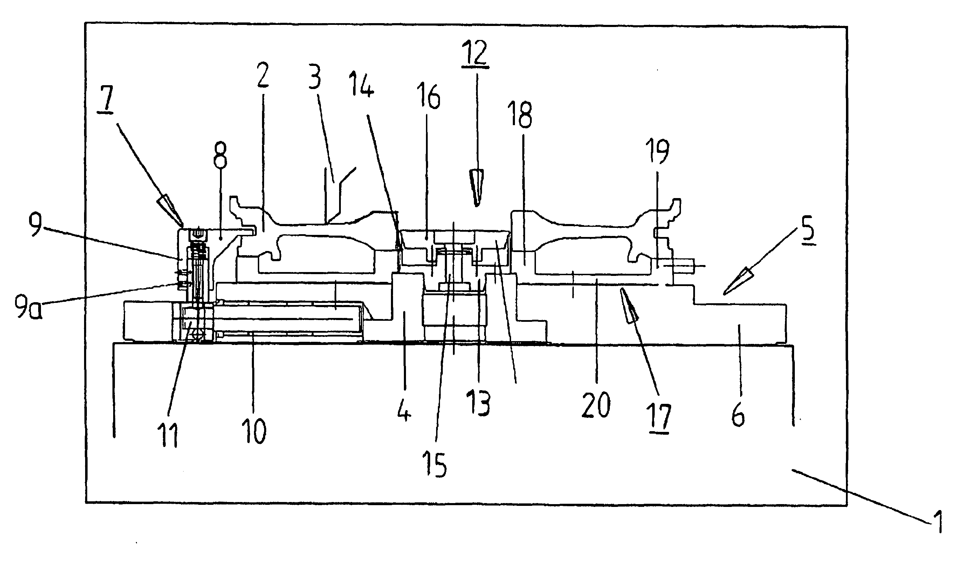

Ein Ausführungsbeispiel der Erfindung wird anhand der Zeichnung, deren einzige Figur eine seitliche Schnittansicht einer in eine Werkzeugmaschine integrierten Spannvorrichtung für eine Rotorscheibe eines Kompressors zeigt, näher erläutert.

Eine Werkzeugmaschine 1 für die spangebende Bearbeitung von in dem vorliegenden Ausführungsbeispiel als Rotorscheiben ausgebildeten Werkstücken 2 mit einem Werkzeug 3 ist mit einem Aufnahmeflansch 4 versehen, an dem eine Spannvorrichtung 5 befestigt ist. Die Spannvorrichtung 5 umfasst eine in der Draufsicht kreisförmige Grundplatte 6, an der auf einem Kreis in regelmäßigem Abstand sowohl radial als auch in der Höhe verstellbare Spannelemente 7 angeordnet sind. Spannbacken 8 der Spannelemente 7 sind an einer senkrecht zur Grundplatte 6 angeordneten Vertikalführung 9 geführt und können an dieser in einer vorgegebenen Höhe mittels Arretierschrauben 9a fixiert werden. Die Vertikal-Führung 9 ist mit einer in einem in der Grundplatte 6 ausgebildeten Führungskanal 10 verschiebbaren Horizontal-Führungsschiene 11 verbunden. Die Horizontal-Führungsschiene 11 kann ebenfalls in einer gewünschten Position arretiert werden.

Neben der zuvor beschriebenen Spannvorrichtung 5 umfasst die Haltevorrichtung weiterhin ein entsprechend dem jeweils zu bearbeitenden Werkstück in der Höhe und dem Außendurchmesser unterschiedlich dimensioniertes Zentrierelement 12, das lösbar am Aufnahmeflansch 4 befestigt ist. Das Zentrierelement 12 besteht aus einem von einem Sockel 13 ausgehenden Zentrierzylinder 14, in dessen offenes Ende eine mit einer Spannschraube 15 am Sockel 13 gehaltene, sich verjüngende Spannplatte 16 eingreift. Beim Anziehen der Spannschraube 15 wird die dünne Zylinderwand des Zentrierzylinders 14 mit dem weiteren Einziehen des Spannplattenkonus in den Zentrierzylinder nach außen gedrückt und dadurch der Zentrierzylinder 14 geweitet, so dass die Zylinderwand eng an der Innenumfangsfläche des Werkstücks anliegt und dieses exakt zentrisch im Arbeitsraum der Werkzeugmaschine angeordnet ist.

Zu dem Werkstückhaltesystem gehören des Weiteren mehrere - entsprechend dem jeweils zu bearbeitenden Werkstück 2 unterschiedlich dimensionierte - Auflageelemente 17, die aus einem inneren Auflagering 18 und einem äußeren Auflagering 19 sowie diese verbindenden Querstegen 20 bestehen. Die Stärke der Auflageringe 18 und 19 und deren Durchmesser sind an die Form des jeweils spangebend zu bearbeitenden Werkstücks 2 (Rotorscheibe) angepasst. Die Fixierung des jeweiligen Auflageelements 17 erfolgt in der vorliegenden Ausführungsform mittels auf der Grundplatte 6 angebrachten, einen Kopf aufweisenden Stiften (nicht dargestellt), die in schlüssellochförmige Öffnungen (nicht dargestellt) in den Querstegen 20 eingreifen. Es ist jedoch auch eine magnetische oder andere formschlüssige Fixierung des Auflageelements denkbar. An dem Auflageelement 17 lösbar angebrachte Griffe (nicht dargestellt) erleichtern die Handhabung bei der Montage und Demontage.

Unabhängig von der Dimensionierung des zu bearbeitenden Werkstücks 2 ist ein und dieselbe Grundplatte 6 mit den verstellbaren Spannelementen 7 fest in der Werkzeugmaschine 1 montiert. Für die Bearbeitung einer in der Zeichnung beispielhaft dargestellten Rotorscheibe werden zunächst das entsprechende Zentrierelement 12 und anschließend das passende Auflageelement 17 auf den Aufnahmeflansch 4 bzw. die Grundplatte 6 aufgebracht und dort fixiert. Es wird jeweils ein derart an die Form und die Abmessungen des Werkstücks 2 angepasstes Zentrierelement bzw. Auflageelement montiert, dass das anschließend auf das Auflageelement 17 aufgelegte Werkstück in einer auf das Werkzeug abgestimmten Höhe und zentrisch in der Werkzeugmaschine angeordnet ist. Danach wird das Zentrierelement 12 durch Anziehen der Spannschraube 15 und entsprechendes Weiten des Zentrierzylinders 14 am Innenumfang des Werkstücks 2 verspannt und dadurch die exakt zentrische Lage des Werkstücks 2 fixiert. Schließlich wird das Werkstück auch am Außenumfang mit den radial und in der Höhe verstellbaren Spannbacken 8, die hier in eine am Außenumfang umlaufende Nut eingreifen, eingespannt. Für einen weiteren Bearbeitungsschritt oder die Bearbeitung eines anders dimensionierten Werkstücks müssen lediglich das Auflageelement 17 und das Zentrierelement 12 ausgetauscht werden, um die richtige Position des Werkstücks im Arbeitsraum der Werkzeugmaschine zu bestimmen.

### Bezugszeichenliste

- 1: Werkzeugmaschine
- 2: Werkstück/Rotorscheibe
- 3: Werkzeug
- 4: Aufnahmeflansch
- 5: Spannvorrichtung
- 6: Grundplatte
- 7: Spannelement
- 8: Spannbacken
- 9: Vertikalführung
- 9a: Arretierschrauben
- 10: Führungskanal
- 11: Horizontalführungsschiene
- 12: Zentrierelement
- 13: Sockel
- 14: Zentrierzylinder
- 15: Spannschraube
- 16: Spannplatte
- 17: Auflageelement
- 18: Innerer Auflagering
- 19: Äußerer Auflagering
- 20: Quersteg

## Patentansprüche

1. Werkstückhaltesystem für eine Werkzeugmaschine zur lagerichtigen Positionierung von scheibenförmigen Werkstücken (2), insbesondere von Rotorscheiben eines Gasturbinentriebwerks, im Arbeitsraum einer Werkzeugmaschine mit einem Aufnahmeflansch (4), das eine Grundplatte (6), radial und in der Höhe verstellbare Spannelemente (7) zum Einspannen des Werkstücks (2) an dessen Außenumfang und ein austauschbares Auflageelement (17) für das Werkstück (2) aufweist, **dadurch gekennzeichnet dass** die Grundplatte mit den Spannelementen versehen ist und ein austauschbares, lösbar am Aufnahmeflansch (4) befestigtes Zentrierelement (12) zum Zentrieren des Werkstücks (2) an seiner Innenumfangsfläche sowie ein auf der Grundplatte (6) lösbar fixiertes, austauschbares Auflageelement (17) für das Werkstück (2)vorgesehen sind, wobei eine Mehrzahl unterschiedlicher, jeweils an die Form und Größe des jeweiligen Werkstücks (2) zu dessen lagerichtiger Positionierung in dem jeweiligen Bearbeitungsschritt angepasster Zentrier- und Auflageelemente (12, 17) vorgesehen ist und wobei das jeweils eingesetzte Zentrierelement (12) einen von einem Sockel (13) ausgehenden Zentrierzylinder (14) umfasst, in dessen offene Seite eine mit einer Spannschraube (15) einstellbare, sich verjüngende Spannplatte (16) eingreift.

2. Werkstückhaltesystem nach Anspruch 1, **dadurch gekennzeichnet, dass** die Spannelemente (7) im Abstand zueinander an der Grundplatte angeordnet sind und mittels einer Vertikalführung (9) höhenverstellbare und arretierbare Spannbacken (8) umfassen, wobei die Vertikalführung (9) mit einer in der Grundplatte (2) geführten und arretierbaren Horizontalführungsschiene (11) verbunden ist.

3. Werkstückhaltesystem nach Anspruch 1, **dadurch gekennzeichnet, dass** das jeweils eingesetzte Auflageelement (17) aus zwei im Durchmesser unterschiedlich großen, durch Querstege (20) verbundenen Auflageringen (18, 19) besteht, die in der Dicke und Größe an das Werkstück und den Bearbeitungsschritt angepasst sind.

4. Werkstückhaltesystem nach Anspruch 4, **dadurch gekennzeichnet, dass** das Auflage- und das Zentrierelement zur schraubenlosen Schnellbefestigung durch formschlüssige Verbindungsmittel oder magnetisch an dem Aufnahmeflansch (4) der Werkzeugmaschine (1) bzw. an der Grundplatte (2) angebracht sind.

5. Werkstückhaltesystem nach Anspruch 5, **dadurch gekennzeichnet, dass** die formschlüssigen Verbindungsmittel eine Bajonettverbindung oder eine Schlüsselloch-Kopfstift-Verbindung umfasst.

6. Werkstückhaltesystem nach Anspruch 1, **dadurch gekennzeichnet, dass** die Auflageelemente zur Gewichtsminimierung in Sandwich-Bauweise ausgebildet sind.

7. Werkstückhaltesystem nach Anspruch 1, **dadurch gekennzeichnet, dass** an den Auflageelementen lösbare Griffe zur Vereinfachung der manuellen Handhabung vorgesehen sind.

8. Verfahren zur lagerichtigen Positionierung von scheibenförmigen Werkstücken (2), insbesondere von Rotorscheiben eines Gasturbinentriebwerks, im Arbeitsraum einer Werkzeugmaschine mittels eines Werkstückhaltesystems nach einem der Ansprüche 1 bis 7, **dadurch gekennzeichnet, dass** zunächst das entsprechende Zentrierelement (12) und anschließend das passende Auflageelement (17) auf den Aufnahmeflansch (4) der Werkzeugmaschine (1) bzw. die Grundplatte (6) aufgebracht und dort fixiert werden, danach das Zentrierelement (12) durch Anziehen der Spannschraube (15) und entsprechendes Weiten des Zentrierzylinders (14) am Innenumfang des Werkstücks (2) verspannt wird und schließlich das Werkstück (2) auch am Außenumfang mit den radial und in der Höhe verstellbaren Spannbacken (8) eingespannt wird.

## Claims

1. Workpiece holding system for a machine tool for the positionally correct location of disk-shaped workpieces (2), in particular of rotor disks for a gas-turbine engine, in the work area of a machine tool with a locating flange (4), which has a base plate (6), radially and vertically adjustable clamping elements (7) for restraining the workpiece (2) on its outer circumference, and an exchangeable supporting element (17) for the workpiece (2), **characterized in that** the base plate is provided with clamping elements and that an exchangeable centering element (12), which is separably attached to the locating flange (4), for centering the workpiece (2) on its inner circumferential surface is provided as well as an exchangeable supporting element (17) for the workpiece (2), with the supporting element (17) being separably fixed to the base plate (6), and with a plurality of different centering and supporting elements (12, 17) being provided, each of them adapted to the shape and size of the respective workpiece (2) for its positionally correct location during the respective processing operation, and with the respective centering element (12) including a centering cylinder (14) emerging from a base (13), whose open end mates with a tapered clamping plate (16), which is adjustable by means of a clamping bolt (15).

2. Workpiece holding system in accordance with Claim 1, **characterized in that** clamping elements (7) are arranged on the base plate at a certain distance from each other, which include vertically adjustable and lockable clamping jaws (8), with the vertical track (9) being connected to a lockable horizontal guide rail (11) provided in the base plate (2).

3. Workpiece holding system in accordance with Claim 1, **characterized in that** the respective supporting element (17) includes two support rings (18, 19) of different diameter, connected by braces (20), the thickness and size of the support rings (18, 19) being adapted to the workpiece and the respective processing step.

4. Workpiece holding system in accordance with Claim 4, **characterized in that** the supporting element and the centering element are fixed to the locating flange (4) of the machine tool (1) and/or to the base plate (6) by magnetic or other positive means for quick attachment without threaded fasteners.

5. Workpiece holding system in accordance with Claim 5, **characterized in that** the positive fixation means include a bayonet-type joint or headed pins that engage keyhole-style openings.

6. Workpiece holding system in accordance with Claim 1, **characterized in that** the supporting elements are provided in sandwich construction to save weight.

7. Workpiece holding system in accordance with Claim 1, **characterized in that** separably attached handles are provided on the supporting elements to facilitate manipulation.

8. Method for positionally correct location of disk-shaped workpieces (2), in particular of rotor disks for a gas-turbine engine, in the work area of a machine tool by means of a workpiece holding system in accordance with one of the Claims 1 to 7, **characterized in that** the respective centering element (12) and the appertaining supporting element (17) are, in this sequence, placed on and fixed to the locating flange (4) of the machine tool (1) or the base plate (6), respectively, that the centering element (12) is then restrained on the inner circumference of the workpiece (2) by tightening the clamping bolt (15), thus widening the centering cylinder (14), and that the workpiece (2) is finally also restrained on the outer circumference by the radially and vertically adjustable clamping jaws (8).

## Revendications

1. Système de fixation de pièce pour une machine-outil, destiné à positionner des pièces (2) en forme de disque, en particulier des disques de rotor pour un moteur à turbine à gaz, correctement dans l'espace de travail d'une machine-outil avec une bride de fixation (4), qui comprend une plaque de base (6), des éléments de serrage (7) réglables dans le sens radial et en hauteur pour serrer la pièce (2) sur son pourtour extérieur, et un élément d'appui (17) échangeable pour la pièce (2), **caractérisé en ce que** la plaque de base est pourvue d'éléments de serrage, et qu'un élément de centrage (12) échangeable et fixé de manière détachable sur la bride de fixation (4) pour centrer la pièce (2) sur sa surface circonférentielle intérieure ainsi qu'un élément d'appui (17) échangeable et fixé de manière détachable sur la plaque de base (6) sont prévus pour l'outil (2), sachant qu'une pluralité de différents éléments de centrage et d'appui (12, 17) à chaque fois adaptés à la forme et aux dimensions de la pièce respective (2) est prévue, afin d'assurer le positionnement exacte dans la phase d'usinage respective, et que l'élément de centrage (12) utilisé comprend un cylindre de centrage (14) partant d'un socle (13), dans l'extrémité libre duquel s'engage une plaque de serrage (16) à section décroissante et ajustable par une vis de serrage (15).

2. Système de fixation de pièce selon la revendication n° 1, **caractérisé en ce que** les éléments de serrage (7) sont disposés sur la plaque de base avec une certaine distance entre eux et comprennent des mâchoires de serrage (8) arrêtables et réglables en hauteur moyennant un guidage vertical (9), sachant que le guidage vertical (9) est connecté à un rail-guide horizontal (11) arrêtable et guidé dans la plaque de base (2).

3. Système de fixation de pièce selon la revendication n° 1, **caractérisé en ce que** l'élément d'appui (17) utilisé chaque fois consiste de deux anneaux d'appui (18, 19) de différents diamètres reliés par des entretoises (20), et dont l'épaisseur et le diamètre sont adaptés à la pièce et la phase d'usinage en question.

4. Système de fixation de pièce selon la revendication n° 4, **caractérisé en ce que** les éléments d'appui et de centrage pour la fixation rapide sans vis sont attachés à la bride de fixation (4) de la machine-outil (1) et/ou à la plaque de base (6) par complémentarité de forme ou de manière magnétique.

5. Système de fixation de pièce selon la revendication n° 5, **caractérisé en ce que** les moyens de fixation par complémentarité de forme comprennent un raccord à baïonnette ou des goupilles à tête qui s'engagent dans des orifices en forme de trou de serrure.

6. Système de fixation de pièce selon la revendication n° 1, **caractérisé en ce que** les éléments d'appui sont fabriqués selon une construction en sandwich pour minimiser le poids.

7. Système de fixation de pièce selon la revendication n° 1, **caractérisé en ce que** des poignées amovibles sont prévues pour faciliter la manipulation manuelle.

8. Procédé pour positionner des pièces (2) en forme de disque, en particulier des disques de rotor pour un moteur à turbine à gaz, correctement dans l'espace de travail d'une machine-outil moyennant un système de fixation de pièce selon une des revendications n° 1 à 7, **caractérisé en ce que** l'élément de centrage (12) correspondant puis l'élément d'appui (17) adéquat sont placés et fixés respectivement sur la bride de fixation (4) de la machine-outil ou la plaque de base (6), que l'élément de centrage (12) est ensuite serré sur le pourtour intérieur de la pièce (2) par serrage de la vis de serrage (15) et élargissement correspondant du cylindre de centrage (14), et que finalement la pièce (2) est également serrée sur le pourtour extérieur avec les mâchoires de serrage (8) réglables radialement et en hauteur.
